# EUROPÄISCHE PATENTANMELDUNG

(11) **EP 1 571 033 A1**
(43) Veröffentlichungstag der Anmeldung: **07.09.2005**
(21) Anmeldenummer: 05100533.8
(22) Anmeldetag: 27.01.2005
(51) Int. Cl.: B60K 37/06, B60Q 3/00

(54) **Bedieneinheit für ein Kraftfahrzeug**

(30) Priorität: 02.03.2004 DE 102004010178
(71) Anmelder: SIEMENS AKTIENGESELLSCHAFT, 80333 München (DE)
(72) Erfinder: Heck, Thomas, 55130, Mainz-Laubenheim (DE)

(57) **Zusammenfassung**

Die Erfindung bezieht sich auf eine Bedieneinheit (2) für in einem Kraftfahrzeug zu steuernde Funktionen, insbesondere auf eine Bedieneinheit zur Steuerung von Heizungs- und/oder Klimaparametern in einem Kraftfahrzeug, mit mindestens einem verschiebbaren oder verdrehbaren Bedienknopf (9), der auf der Bedieneinheit (2) angeordnet ist und auf der Bedieneinheit (2) aufgebrachten Symbolen (8), wobei die Stellung des Bedienknopfes (9) im Bezug auf ein Symbol (8) eine Funktion im Kraftfahrzeug auslöst. Um eine Bedieneinheit (2) anzugeben, bei der das Symbol (8) der Funktion, die momentan von einem Bedienknopf (9) angesteuert wird, besonders deutlich erkennbar ist, ist der mindestens einen Bedienknopf (9) aus einem durchsichtigen Material ausgebildet und der Bedienknopf ist zum Ansteuern einer Funktion über das die Funktion kennzeichnende Symbol (8) bewegbar, wobei die Form des durchsichtigen Bedienknopfes (9) derart gestaltet ist, dass einem Betrachter (17) das Symbol (8), über dem sich der Bedienknopf (9) befindet, vergrößert erscheint.

## Beschreibung

Die Erfindung betrifft eine Bedieneinheit für in einem Kraftfahrzeug zu steuernde Funktionen, insbesondere eine Bedieneinheit zur Steuerung von Heizungs- und/oder Klimaparametern in einem Kraftfahrzeug, mit mindestens einem verschiebbaren oder verdrehbaren Bedienknopf, der auf der Bedieneinheit angeordnet ist und auf der Bedieneinheit aufgebrachten Symbolen, wobei die Stellung des Bedienknopfes im Bezug auf ein Symbol eine Funktion im Kraftfahrzeug auslöst.

Bedieneinheiten der eingangs genannten Art sind hinreichend bekannt und werden in Kraftfahrzeugen, vor allem im Armaturenbrett oder der Mittelkonsole, angeordnet. Auf den Bedieneinheiten ist in der Regel eine Vielzahl von Symbolen aufgedruckt, die eine bestimmte von der Bedieneinheit ausgelöste Funktion symbolisieren. Wird ein verschiebbarer oder verdrehbarer Bedienknopf einem solchen Symbol angenähert, so wird die vom Symbol symbolisierte Funktion im Kraftfahrzeug angesteuert. Diese Symbole sind oft, auf Grund des geringen Bauraumes im Cockpitbereich, in geringer Größe auf die Bedieneinheit aufgedruckt und können oft schlecht erkannt werden. Gerade für ältere Kraftfahrer ist die Akkomodation des Auges von der Fernsicht bei der Beobachtung des Straßenverkehrs zur Nahsicht zur Erfassung der auf der Bedieneinheit aufgedruckten Symbole ein problematischer Prozess. Dieser Akkomodationsprozess kann bei älteren Kraftfahrern eine wesentlich längere Zeit in Anspruch nehmen als bei jüngeren Kraftfahrern, wodurch ältere Kraftfahrer die die Symbole auf der Bedieneinheit visuell erfassen wollen, über einen längeren Zeitraum vom Verkehrsgeschehen abgelenkt sind als jüngere Kraftfahrer.

Es ist auch denkbar, dass die Akkomodationskraft der Augen eines älteren Kraftfahrers überhaupt nicht ausreicht, um die auf der Bedieneinheit aufgedruckten Symbole scharf wahrnehmen zu können.

Es ist die Aufgabe der Erfindung, eine Bedieneinheit anzugeben, bei der das Symbol der Funktion, die momentan von einem Bedienknopf angesteuert wird, besonders deutlich erkennbar ist.

Die Aufgabe wird dadurch gelöst, dass der mindestens eine Bedienknopf aus einem durchsichtigen Material ausgebildet ist und der Bedienknopf zum Ansteuern einer Funktion über das die Funktion kennzeichnende Symbol bewegbar ist, wobei die Form des durchsichtigen Bedienknopfes derart gestaltet ist, dass einem Betrachter das Symbol, über dem sich der Bedienknopf befindet, vergrößert erscheint.

Bei einer Weiterbildung ist der Bedienknopf aus einem durchsichtigen Kunststoff gebildet. Kunststoffe sind sehr kostengünstige und leichte Materialien, die großtechnisch sehr einfach zu verarbeiten sind und sich gerade für eine Massenproduktion bestens eignen.

Bei einer nächsten Weiterbildung ist der Bedienknopf aus einem eingefärbten, durchsichtigen Material gebildet. Ein eingefärbtes Material bietet dem Betrachter eine angenehme Wahrnehmung des unter dem Bedienknopf angeordneten Symbols und es vermeidet Blendwirkungen nachhaltig.

Bei einer Ausgestaltung ist der Bedienknopf als plankonvexe Sammellinse ausgebildet. Eine plankonvexe Sammellinse vergrößert das unter ihr befindliche Symbol wesentlich und sie passt sich gut einer unter ihr befindlichen planen Oberfläche der Bedieneinheit an.

Alternativ dazu ist der Bedienknopf als konvexkonkave Sammellinse ausgebildet. Eine konvexkonkave Sammellinse ermöglicht eine gute Vergrößerung des unter ihr angeordneten Symbols, wobei die Linse hervorragend einer gewölbten Oberfläche der Bedieneinheit angepasst werden kann.

Bei einer weiteren Ausgestaltung ist der Bedienknopf als Fresnelsche Sammellinse ausgebildet. Diese Linsen können sehr flach ausgeführt werden, wobei aber eine hohe Vergrößerung möglich ist. Die Fresnelsche Linsenstruktur erhöht zudem die Griffigkeit der Oberfläche des Bedienknopfes.

Vorteilhaft ist es auch, wenn der Bedienknopf als prismatische Sammellinse ausgebildet ist. Auch eine prismatische Sammellinse bewirkt die gewünschte Vergrößerung des unter dem Bedienknopf befindlichen Symbols und darüber hinaus ist sie vom Fahrzeuginsassen gut zu erfassen.

Die Ausbildung des Bedienknopfes als bikonvexe Sammellinse bietet den Vorteil der starken Vergrößerung der unter ihr erscheinenden Symbole.

Bei einer Weiterbildung wird das Symbol von einer auf der von einem Fahrzeuginsassen abgewandten Seite des Symbols angeordneten Lichtquelle durchleuchtet. Die Durchleuchtung des Symbols gewährleistet eine hervorragende Erkennbarkeit des Symbols bei einer Nachtfahrt.

Die Erfindung lässt zahlreiche Ausführungsformen zu. Einige davon sollen anhand der in den Zeichnungen dargestellten Figuren erläutert werden. Diese zeigen in:
- Figur 1:: ein Armaturenbrett eines Kraftfahrzeuges,
- Figuren 2 a bis 2e:: verschiedene Ausführungsformen des Bedienknopfes.

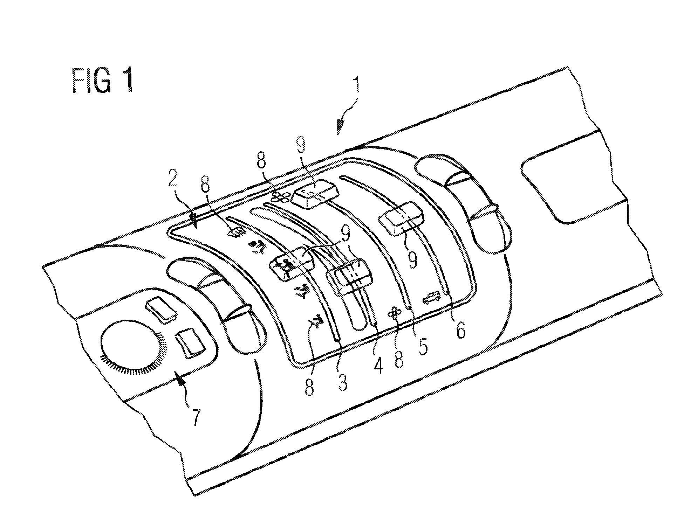

Figur 1 zeigt ein Armaturenbrett 1 oder eine Mittelkonsole eines Kraftfahrzeuges. In diesem Armaturenbrett 1 ist eine Bedieneinheit 2 angeordnet. Die hier dargestellte Bedieneinheit 2 dient zur Ansteuerung von Heizungs- und/oder Klimaparametern im Kraftfahrzeug. Dazu ist eine erste Teileinheit 3 zur Ansteuerung der Luftzufuhrdüsen, eine zweite Teileinheit 4 zur Regelung der Luftmenge, eine dritte Teileinheit 5 zur Regelung der Lufttemperatur sowie eine vierte Teileinheit 6 zur Steuerung weiterer Heizungs- und/oder Klimaparameter ausgebildet. Die Bedieneinheit 2 kann selbstverständlich auch an anderen Stellen im Kraftfahrzeug, zum Beispiel im fahrgastseitigen Türbereich oder Fahrzeugdach angeordnet sein und vielfältige Funktion im Fahrzeug ansteuern.

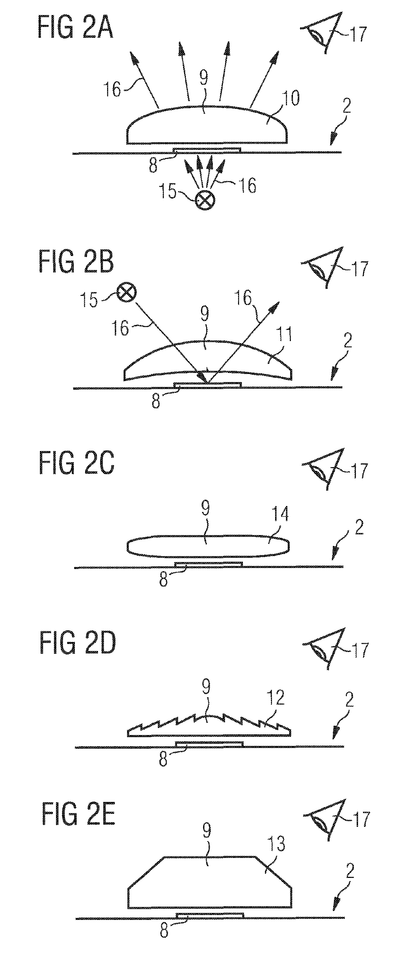

Auf der Bedieneinheit 2 sind unterschiedliche, den Teileinheiten 3, 4, 5, 6 zugeordnete Symbole 8 aufgedruckt. Auf Grund des geringen Bauraumes, der für die Bedieneinheit 2 im Armaturenbrett 1 zur Verfügung steht, sind die Symbole 8 relativ klein gehalten. Die auf der Bedieneinheit 2 ausgebildeten Bedienknöpfe 9 sind über die Symbole 8 bewegbar. Da die Bedienknöpfe 9 aus durchsichtigem Material ausgebildet sind, sind die unter dem Bedienknopf 9 befindlichen Symbole 8 von einem hier nicht dargestellten Fahrzeuginsassen wahrnehmbar. Die Wahrnehmbarkeit der unter den Bedienknöpfen 9 befindlichen Symbole 8 wird durch die räumliche Gestaltung der Bedienknöpfe 9 verstärkt.
Die Bedienknöpfe 9 sind dazu derart räumlich ausgebildet, dass die unter ihnen befindlichen Symbole 8 bei der Betrachtung durch den Fahrzeuginsassen vergrößert erscheinen. Mögliche Ausbildungsformen der Bedienknöpfe 9 sind in den Figuren 2a bis 2e näher dargestellt.

Die Figuren 2a bis 2e zeigen jeweils eine Bedieneinheit 2 mit einem darauf aufgedruckten Symbol 8 und einem über dem Symbol 8 platzierten Bedienknopf 9. Darüber hinaus ist in den Figuren 2a bis 2e eine mögliche Betrachtungsposition des Fahrzeuginsassen 17 im Bezug auf die Bedieneinheit 2 dargestellt.

In Figur 2a findet sich ein Bedienknopf 9, der als plankonvexe Sammellinse 10 ausgebildet ist. Diese plankonvexe Sammellinse 10 vergrößert das unter ihr angeordnete Symbol 8 im Auge des Fahrzeuginsassen 17. Weiterhin ist in der Figur 2a eine Lichtquelle 15 zu erkennen, die auf der vom Fahrzeuginsassen 17 abgewandten Seite der Bedieneinheit 2 angeordnet ist. Die Lichtquelle 15 durchstrahlt das Symbol 8, das wie schon erwähnt durch die über dem Symbol angeordnete plankonvexe Sammellinse 10 vergrößert dargestellt wird. Diese durchscheinende Ausbildung des Symbols 8 in Kombination mit einer Strahlungsquelle 15 und dem plankonvex ausgebildeten Bedienknopf 9 ermöglicht vor allem bei einer Nachtfahrt eine hervorragende Erkennbarkeit des Symbols 8. Der von der Lichtquelle 15 hervorgerufene Strahlengang 16 ist in Figur 2a angedeutet.

Figur 2b zeigt den Bedienknopf 9 in der Ausbildung als konvexkonkave Sammellinse 11. Auch hier ist das Auge des Fahrzeuginsassen 17 angedeutet, wobei nun die Bestrahlung des Symbols 8 durch eine auf der dem Fahrzeuginsassen 17 zugewandten Seite der Bedieneinheit angeordneten Lichtquelle 15 erfolgt. Diese Lichtquelle 15 kann zum Beispiel das Tageslicht sein.

Figur 2c zeigt die aus Figur 2a und 2b bekannte Anordnung der Bedieneinheit 2 mit dem Symbol 8, wobei nun der Bedienknopf 9 als bikonvexe Sammellinse 14 ausgebildet ist.

Auch die Figur 2d zeigt den bekannten Aufbau, wobei nun der Bedienknopf 9 als Fresnelsche Sammellinse ausgebildet ist. Hier lässt sich der Bedienknopf besonders flach und griffig ausbilden.

Als letztes Ausführungsbeispiel zeigt die Figur 2e den Bedienknopf 9 als prismatische Sammellinse 13. Die hier in den Figuren gezeigten, das Symbol 8 vergrößernden Bedienknöpfe 9 erleichtern dem Fahrzeuginsassen 17 die Erkennung des unter dem Bedienknopf 9 angeordneten Symbols 8 wesentlich. Gerade für Menschen mit geschwächter Akkomodationskraft der Augen bedeutet die hier vorgestellte Lösung einen wesentlichen Beitrag zum sicheren Umgang mit dem Kraftfahrzeug im Straßenverkehr.

## Patentansprüche

1. Bedieneinheit für in einem Kraftfahrzeug zu steuernde Funktionen, insbesondere Bedieneinheit zur Steuerung von Heizungs- und/oder Klimaparametern in einem Kraftfahrzeug, mit mindestens einem verschiebbaren oder verdrehbaren Bedienknopf, der auf der Bedieneinheit angeordnet ist und auf der Bedieneinheit aufgebrachten Symbolen, wobei die Stellung des Bedienknopfes im Bezug auf ein Symbol eine Funktion im Kraftfahrzeug auslöst, **dadurch gekennzeichnet, dass** der mindestens eine Bedienknopf (9) aus einem durchsichtigen Material ausgebildet ist und der Bedienknopf (9) zum Ansteuern einer Funktion über das die Funktion kennzeichnende Symbol (8) bewegbar ist, wobei die Form des durchsichtigen Bedienknopfes (9) derart gestaltet ist, dass einem Betrachter (17) das Symbol (8), über dem sich der Bedienknopf (9) befindet, vergrößert erscheint.

2. Bedieneinheit für in einem Kraftfahrzeug zu steuernde Funktionen nach Anspruch 1, **dadurch gekennzeichnet, dass** der Bedienknopf (9) aus einem durchsichtigen Kunststoff gebildet ist.

3. Bedieneinheit für in einem Kraftfahrzeug zu steuernde Funktionen nach Anspruch 1, **dadurch gekennzeichnet, dass** der Bedienknopf (9) aus einem eingefärbten, durchsichtigen Material gebildet ist.

4. Bedieneinheit für in einem Kraftfahrzeug zu steuernde Funktionen nach Anspruch 1, **dadurch gekennzeichnet, dass** der Bedienknopf (9) als plankonvexe Sammellinse ausgebildet ist.

5. Bedieneinheit für in einem Kraftfahrzeug zu steuernde Funktionen nach Anspruch 1, **dadurch gekennzeichnet, dass** der Bedienknopf (9) als konvexkonkave Sammellinse ausgebildet ist.

6. Bedieneinheit für in einem Kraftfahrzeug zu steuernde Funktionen nach Anspruch 1, **dadurch gekennzeichnet, dass** der Bedienknopf (9) als Fresnelsche Sammellinse ausgebildet ist.

7. Bedieneinheit für in einem Kraftfahrzeug zu steuernde Funktionen nach Anspruch 1, **dadurch gekennzeichnet, dass** der Bedienknopf 9 als prismatische Sammellinse ausgebildet ist.

8. Bedieneinheit für in einem Kraftfahrzeug zu steuernde Funktionen nach Anspruch 1, **dadurch gekennzeichnet, dass** der Bedienknopf 9 als bikonvexe Sammellinse ausgebildet ist.

9. Bedieneinheit für in einem Kraftfahrzeug zu steuernde Funktionen nach mindestens einem der vorgenannten Ansprüche, **dadurch gekennzeichnet, dass** das Symbol (8) von einer auf der vom einem Fahrzeuginsassen (17) abgewandten Seite des Symbols (8) angeordneten Lichtquelle (15) durchleuchtet wird.

10. Bedieneinheit für in einem Kraftfahrzeug zu steuernde Funktionen nach mindestens einem der vorgenannten Ansprüche, **dadurch gekennzeichnet, dass** das Symbol (8) von einer auf der dem Fahrzeuginsassen (17) zugewandten Seite des Symbols (8) angeordneten Lichtquelle (15) beleuchtet wird.
